# EUROPÄISCHE PATENTSCHRIFT

(11) **EP 3 690 981 B1**
(45) Veröffentlichungstag und Bekanntmachung des Hinweises auf die Patenterteilung: **16.04.2025**
(21) Anmeldenummer: 20151122.7
(22) Anmeldetag: 10.01.2020
(51) Int. Cl.: H01M 10/04, H01M 50/213, H01M 50/227, H01M 50/503

(54) **ZELLHALTER ZUM HALTEN VON BATTERIEZELLEN**
CELL HOLDER FOR HOLDING BATTERY CELLS
SUPPORT DE CELLULE PERMETTANT DE SUPPORTER LES ÉLÉMENTS DE BATTERIE

(30) Priorität: 01.02.2019 DE 102019201334
(43) Veröffentlichungstag der Anmeldung: 05.08.2020
(73) Patentinhaber: Robert Bosch GmbH, 70442 Stuttgart (DE)
(72) Erfinder: Zielke, Christian, 72800 Eningen Unter Achalm (DE); Alisic, Haris, 72770 Reutlingen (DE); Fanzutti, Sara, 72074 Tuebingen (DE)

(56) Entgegenhaltungen:
- EP-A1- 3 316 342
- DE-A1- 102015 006 297
- DE-U1- 202011 109 863
- US-A1- 2014 287 288

## Beschreibung

### Stand der Technik

Die vorliegende Erfindung betrifft einen Zellhalter zum Halten von Batteriezellen sowie einen Zellblock.

Zylindrische Batteriezellen, wie beispielsweise Li-lonen-Zellen zur Verwendung als Energiespeicher in Fahrzeugen, sind weitgehend in ihren Abmessungen standardisiert. Übliche Batteriezellen liegen beispielsweise in den Formaten "18650" (Durchmesser 18mm, Höhe 65mm) oder "21700" (Durchmesser 21mm, Höhe 70mm) vor. Eine Lagerung solcher Batteriezellen erfolgt meist mittels einfacher Zellhalter. Solche bekannten Zellhalter können jedoch häufig nicht die fertigungsbedingten oder aus Volumenveränderungen resultierenden Toleranzen in den Abmessungen der Batteriezellen ausgleichen und eine definierte und sichere Lagerung der Batteriezellen sicherstellen.

Die Schrift US 2014/0287288 A1 offenbart einen Batteriehalter mit Rückhalteelementen, welche in einen Zwischenraum zwischen Batteriezellen angeordnet sind und eine in axialer Richtung der Batteriezelle verlaufende angeschrägte Oberfläche aufweisen.

Die Schrift DE10 2015 006297 A1 offenbart eine Aufnahmeeinrichtung für eine Energiespeicheranordnung, mit einer Klemmleiste für das Befestigen der Energiespeicher.

Die vorliegende Erfindung hat zur Aufgabe die Halterung von Batteriezellen in einem Batteriezellhalter zu verbessern.

### Offenbarung der Erfindung

Der erfindungsgemäße Zellhalter mit den Merkmalen des Anspruchs 1 bietet demgegenüber den Vorteil einer verbesserten Lagerung von Batteriezellen. Die Batteriezellen werden in dem Zellhalter besonders sicher und stabil gehalten. Dabei können vor allem auch fertigungsbedingte Toleranzen oder im Betrieb verursachte Änderungen der äußeren Abmessungen der Batteriezellen im Bereich mehrerer Prozent durch den Zellhalter ausgeglichen werden, um dauerhaft eine stabile und definierte Lagerung der Batteriezellen sicherzustellen. Dies wird erfindungsgemäß dadurch erreicht, dass der Zellhalter eine erste Halterung, eine zweite Halterung und ein erstes Federelement umfasst. Die erste Halterung ist dabei ausgebildet, um eine erste Batteriezelle aufzunehmen. Die zweite Halterung ist ausgebildet, um eine zweite Batteriezelle aufzunehmen. Die erste Halterung und die zweite Halterung können dabei gehäuseartig und im Wesentlichen zylindrisch ausgebildet sein, sodass die Halterungen die jeweiligen Batteriezellen umschließen. Insbesondere sind die erste Halterung und die zweite Halterung parallel zueinander ausgebildet, sodass jeweilige Längsachsen der beiden Batteriezellen parallel zueinander und auch parallel zu einer Längsachse des Zellhalters sind.

Das erste Federelement weist einen ersten Federabschnitt und einen zweiten Federabschnitt auf. Der erste Federabschnitt ist eingerichtet, die erste Batteriezelle mittels einer ersten Federkraft in der ersten Halterung einzuspannen. Die erste Federkraft ist dabei im Wesentlichen parallel zur axialen Richtung der ersten Batteriezelle. Somit steht der erste Federabschnitt mit einer Stirnseite der ersten Batteriezelle in Eingriff. Der zweite Federabschnitt ist weiterhin eingerichtet, die zweite Batteriezelle mit einer zweiten Federkraft in der zweiten Halterung einzuspannen. Die zweite Federkraft liegt dabei in einer radialen Richtung der zweiten Batteriezelle vor. Also steht der zweite Federabschnitt mit einem Umfang der zweiten Batteriezelle in Eingriff. Vorzugsweise ist das erste Federelement dabei zwischen der ersten Halterung und der zweiten Halterung, insbesondere mittig auf einem Lot, welches die parallelen Längsachsen der beiden Batteriezellen verbindet, angeordnet.

Das erste Federelement bildet somit ein zweifaches Federsystem, welches eingerichtet ist, stirnseitig auf die erste Batteriezelle einzugreifen und umfangsseitig auf die zweite Batteriezelle einzugreifen. Dadurch werden die Batteriezellen auf besonders einfache und zugleich effektive Art und Weise im Zellhalter gehalten. Das erste Federelement kann dabei Toleranzen der Batteriezellen in mehrere Richtungen abdecken und sowohl Längenänderungen, als auch Dickenänderungen beim Betrieb der Batteriezellen über einen großen Toleranzbereich ausgleichen.

Zudem können gezielt starke mechanische Belastungen der Batteriezellen, welche im Anwendungsgebiet, wie beispielsweise in Fahrzeugen, auftreten können, vermieden werden. So ermöglicht der erfindungsgemäße Zellhalter eine besonders effektive Dämpfung äußerer mechanischer Krafteinflüsse auf die Batteriezellen, wie Schwingungen, Schocks oder Vibrationen. Des Weiteren ist der Zellhalter vorzugsweise aus einem Kunststoff gebildet, welcher insbesondere ein flammgeschützter Kunststoff ist, um eine sichere Befestigung der Batteriezellen zu gewährleisten.

Erfindungsgemäß ist das erste Federelement so ausgebildet, dass eine Erhöhung der ersten Federkraft eine Erhöhung der zweiten Federkraft bewirkt. Das heißt, der erste Federabschnitt und der zweite Federabschnitt des ersten Federelements sind so miteinander gekoppelt, dass eine Erhöhung der ersten Federkraft eine Erhöhung der zweiten Federkraft nach sich zieht. Das erste Federelement bewirkt somit eine selbstverstärkende Lagerung der beiden Batteriezellen. Sofern die axiale erste Federkraft auf die erste Batteriezelle erhöht wird, erhöht sich also auch die radiale zweite Federkraft auf die zweite Batteriezelle, wodurch eine besonders stabile Anordnung der beiden Batteriezellen im Zellhalter erreicht wird.

Die Unteransprüche haben bevorzugte Weiterbildungen der Erfindung zum Inhalt.

Bevorzugt umfasst der Zellhalter ferner ein zweites Federelement. Das zweite Federelement weist dabei einen dritten Federabschnitt auf. Der dritte Federabschnitt ist eingerichtet, die erste Batteriezelle mittels einer dritten Federkraft in der ersten Halterung einzuspannen. Die dritte Federkraft liegt dabei in einer radialen Richtung der ersten Batteriezelle. Somit wird die erste Batteriezelle sowohl in axialer Richtung durch das erste Federelement, als auch in radialer Richtung durch das zweite Federelement eingespannt, und befindet sich somit in einer definierten und stabilen Position in der ersten Halterung.

Vorzugsweise ist das erste Federelement so ausgebildet, dass eine Erhöhung der zweiten Federkraft eine Erhöhung der ersten Federkraft bewirkt. Das heißt, der erste Federabschnitt und der zweite Federabschnitt des ersten Federelements sind auch umgekehrt so miteinander gekoppelt, dass eine Erhöhung der zweiten Federkraft eine Erhöhung der ersten Federkraft nach sich zieht. Dadurch ist die selbstverstärkende Lagerung der ersten Batteriezelle und der zweiten Batteriezelle weiter verbessert, um ein sicheres Halten beider Batteriezellen im Zellhalter zu ermöglichen.

Weiterhin ist es vorteilhaft, wenn die erste Federkraft von einer Auslenkung des ersten Federabschnitts in axialer Richtung abhängig ist. Das heißt, je stärker der erste Federabschnitt in axialer Richtung ausgelenkt ist, umso höher ist die erste Federkraft. So kann eine besonders günstige Lagerung erzielt werden, wobei bei stärkerer Auslenkung des ersten Federabschnitts eine höhere erste Federkraft auf die erste Batteriezelle einwirkt und diese zurück in die vorgesehene Position stellt. Bei zunehmender Größen-Ausdehnung der ersten Batteriezelle in axialer Richtung, oder bei zunehmender Verschiebung der ersten Batteriezelle in der ersten Halterung erhöht sich somit die erste Federkraft, welche die erste Batteriezelle in der ersten Halterung hält und positioniert. Somit kann eine besonders zuverlässige und definierte Positionierung der ersten Batteriezelle in der ersten Halterung erzielt werden.

Bevorzugt ist außerdem die zweite Federkraft von einer Auslenkung des zweiten Federabschnitts in radialer Richtung abhängig. Analog zur Verstärkung der Federkraft des ersten Federabschnitts in axialer Richtung, wird somit auch bei zunehmender Auslenkung des zweiten Federabschnitts in radialer Richtung die zweite Federkraft erhöht. Dadurch wird die Positionierung und das Halten der zweiten Batteriezelle in der zweiten Halterung weiter verbessert.

Vorzugsweise umfasst die zweite Halterung zwei radiale Anschläge. Die beiden radialen Anschläge sowie der zweite Federabschnitt sind bevorzugt um den Umfang der zweiten Halterung verteilt angeordnet. Die zweite Batteriezelle wird dabei durch die Vorspannkraft des zweiten Federabschnitts zwischen jeweils dem zweiten Federabschnitt und den beiden radialen Anschlägen eingeklemmt, was zu einer statisch bestimmten Einspannung der zweiten Batteriezelle in der zweiten Halterung führt. Dadurch ergibt sich eine radiale Drei-Punkt-Befestigung der zweiten Batteriezelle in der zweiten Halterung. Hierdurch kann die zweite Batteriezelle besonders exakt positioniert werden und eine Relativbewegung innerhalb der zweiten Halterung wird zuverlässig unterdrückt. Besonders günstig ist es dabei wenn jede Halterung des Zellhalters jeweils zwei radiale Anschläge aufweist, wobei die jeweils in der Halterung aufnehmbare Batteriezelle durch ein entsprechendes Federelement zwischen einem Federabschnitt des Federelements und den beiden radialen Anschlägen einklemmbar ist.

Weiterhin ist es besonders günstig, wenn der erste Federabschnitt derart ausgebildet ist, dass dieser mit einem Schulterbereich der ersten Batteriezelle in Eingriff steht. Vorteilhafterweise steht der erste Federabschnitt dabei ausschließlich mit dem Schulterbereich in Eingriff. Als Schulterbereich wird dabei ein radial äußerer ringförmiger Gehäusebereich einer Stirnseite der Batteriezelle angesehen, welcher einen Pluspol oder einen Minuspol der Batteriezelle ringförmig umgibt. Dadurch bleibt der Pluspol oder der Minuspol für die elektrische Kontaktierung frei zugänglich und wird zudem durch die Vorspannkraft des Federelements nicht mechanisch beansprucht. Des Weiteren ist der erste Federabschnitt vorzugsweise so ausgebildet und mit dem Schulterbereich der Batteriezelle in Eingriff, dass die Batteriezelle im Falle eines Überdrucks in Inneren ungehindert entgasen kann.

Bevorzugt umfasst der Zellhalter ferner eine dritte Halterung, welche ausgebildet ist zur Aufnahme einer dritten Batteriezelle. Die dritte Halterung ist vorzugsweise parallel zur ersten Halterung und zur zweiten Halterung. Weiterhin ist es vorteilhaft, wenn die erste Halterung, die zweite Halterung und die dritte Halterung bei Betrachtung in axialer Richtung in einem Dreieck angeordnet sind. Somit kann eine besonders platzsparende Konstruktion des Zellhalters erzielt werden.

Besonders bevorzugt umfasst der Zellhalter ferner zumindest ein drittes Federelement. Das erste Federelement, das zweite Federelement und das dritte Federelement sind dabei ausgebildet, jeweils eine der Batteriezellen in axialer Richtung in der entsprechenden Halterung einzuspannen. Weiterhin sind das erste Federelement, das zweite Federelement und das dritte Federelement eingerichtet, jeweils eine der unmittelbar benachbarten Batteriezellen in radialer Richtung in der entsprechenden unmittelbar benachbarten Halterung einzuspannen. In anderen Worten ist jedes der drei Federelemente eingerichtet, jeweils zwei benachbarte bzw. nebeneinanderliegende Batteriezellen einzuspannen. Dabei wird durch das Federelement jeweils eine der beiden benachbarten Batteriezellen in axialer Richtung und die andere Batteriezelle in radialer Richtung eingespannt. Durch die Anordnung der drei Halterungen in einem Dreieck und die spezielle Gestaltung der Federelemente wird somit auf besonders einfache Art und Weise erzielt, dass jede der Batteriezellen sowohl in axialer Richtung, als auch in radialer Richtung eingespannt wird, um eine optimale Anordnung der Batteriezellen in Zellhalter zu gewährleisten. Dabei ist eine besonders einfache Konstruktion des Zellhalters möglich, um dennoch eine effektive und sichere Lagerung aller Batteriezellen zu garantieren.

Besonders günstig ist es weiterhin, wenn der Zellhalter mehrteilig ausgebildet ist. Besonders bevorzugt ist der Zellhalter dabei zweiteilig. Insbesondere ist der Zellhalter dabei in einer Ebene, welche senkrecht zur Längsachse ist, in zwei Teile geteilt. Somit ergibt sich eine besonders einfache und kostengünstige Herstellung des Zellhalters. Außerdem wird ein einfacher Zusammenbau des Zellhalters garantiert.

Vorzugsweise weist ein erster Zellhalter-Teil des Zellhalters jeweils einen axialen Fest-Anschlag je Halterung auf. Der Fest-Anschlag bildet dabei einen fixen Anlagepunkt am Zellhalter gegen welchen die Batteriezellen in axialer Richtung angelegt werden. Ein zweiter Zellhalter-Teil weist zumindest das erste Federelement auf. Sofern mehrere Federelemente vorgesehen sind, sind sämtliche Federelemente am zweiten Zellhalter-Teil ausgebildet. Das Einspannen der Batteriezellen erfolgt dabei durch Vorspannen der beiden Zellhalter-Teile in axialer Richtung gegeneinander. Die Federelemente drücken hierbei die Batteriezellen gegen den Fest-Anschlag. Dadurch können die Batteriezellen auf besonders einfache Art und Weise im Zellhalter angeordnet und eingespannt werden. Zudem können die Federkräfte, mittels welchen die Batteriezellen in die Halterungen eingespannt sind, durch gegeneinander Verschieben der beiden Zellhalter-Teile entlang der Längsachse des Zellhalters besonders einfach und flexibel an die jeweiligen Anforderungen angepasst werden.

Besonders günstig ist es, wenn der erste Zellhalter-Teil eine Kontaktplatte zum Stromabgriff an den Batteriezellen ist. Die Kontaktplatte ist bevorzugt eine ebene Platte. Besonders bevorzugt ist die Kontaktplatte aus einem Metall gebildet, um einen einfachen Stromabgriff an den Batteriezellen zu ermöglichen. Hierfür kann vorteilhafterweise die entsprechende Stirnseite, welche den Minuspol oder den Pluspol der Batteriezellen aufweist, flächig an der Kontaktplatte anliegen. Dadurch kann ein besonders einfacher und kostengünstiger Aufbau des Zellhalters erreicht werden.

Besonders bevorzugt weisen der erste Zellhalter-Teil und der zweite Zellhalter-Teil jeweils zumindest ein Federelement je Halterung auf. Somit ist an beiden axialen Enden jeder Halterung jeweils ein Federelement vorgesehen, welches eingerichtet ist, die jeweilige Batteriezelle in axialer Richtung in der entsprechenden Halterung einzuspannen und eine benachbarte Batteriezelle in radialer Richtung in der benachbarten Halterung einzuspannen.

Ferner betrifft die Erfindung einen Zellblock, der zumindest einen erfindungsgemäßen Zellhalter umfasst. Weiterhin umfasst der Zellblock jeweils eine Batteriezelle je Halterung des Zellhalters. Die Batteriezellen können dabei im standardisierten Format 18650 oder 21700, oder auch in einem beliebigen anderen Format vorliegen.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Zellhalters gemäß einem ersten Ausführungsbeispiel der Erfindung,
- Figur 2: ein Detail einer Schnittansicht der Figur 1 entlang der Linie I-I,
- Figur 3: eine vereinfachte schematische Schnittansicht eines Zellhalters gemäß einem zweiten Ausführungsbeispiel der Erfindung,
- Figur 4: eine vereinfachte schematische Schnittansicht eines Zellhalters gemäß einem dritten Ausführungsbeispiel der Erfindung, und
- Figur 5: eine vereinfachte schematische Schnittansicht eines Zellhalters gemäß einem vierten Ausführungsbeispiel der Erfindung.

### Bevorzugte Ausführungsformen der Erfindung

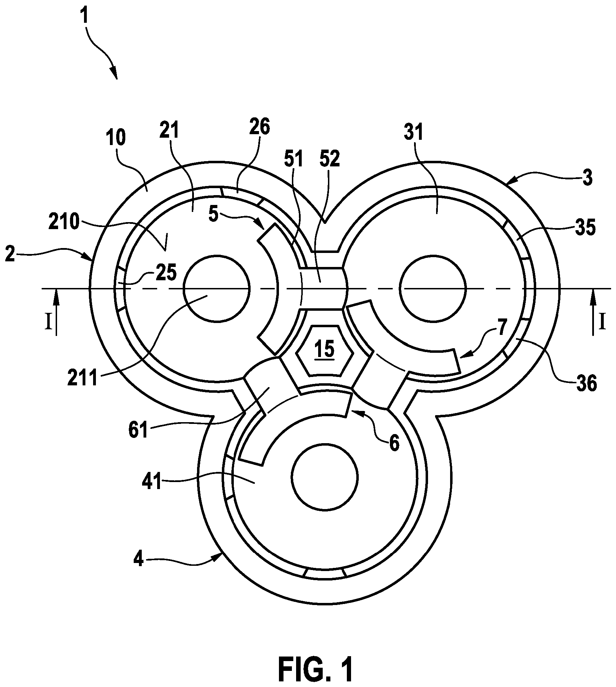

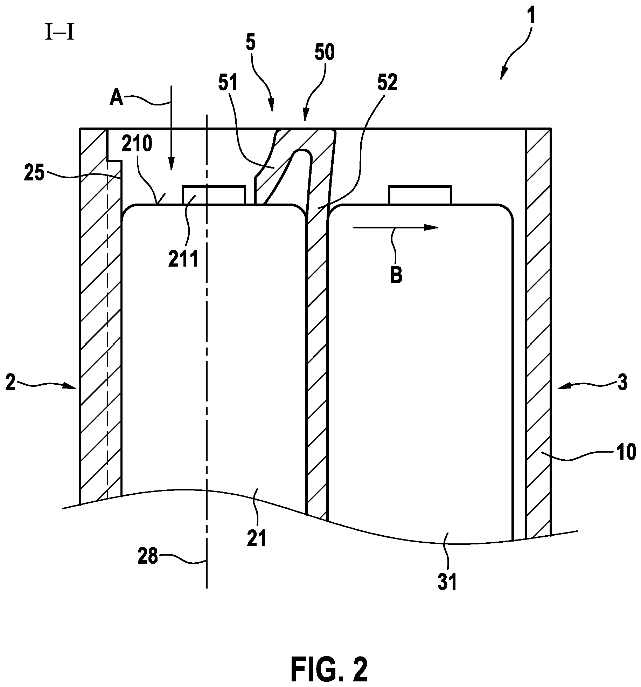

Die Figur 1 zeigt eine vereinfachte schematische Ansicht eines Zellhalters 1 gemäß einem ersten Ausführungsbeispiel der Erfindung. Dargestellt ist eine Draufsicht auf den Zellhalter 1. Die Zellhalter 1 umfasst eine erste Halterung 2, eine zweite Halterung 3 und eine dritte Halterung 4. In den drei Halterungen 2, 3, 4 ist eine erste Batteriezelle 21, eine zweite Batteriezelle 31 bzw. eine dritte Batteriezelle 41 angeordnet. Die drei Halterungen 2, 3, 4 sind dabei innerhalb einer umlaufenden Gehäusewand 10 ausgebildet und parallel zueinander angeordnet, sodass die Längsachsen der drei Batteriezellen 21, 31, 41 jeweils parallel zueinander angeordnet sind. In der Figur 2 ist beispielhaft eine erste Längsachse 28 der ersten Batteriezelle 21 dargestellt, wobei die Längsachse 28 als Bezugsachse repräsentativ für die Ausrichtung der Längsachsen des gesamten Zellhalters 1 und aller Batteriezellen 21, 31, 41 ist. Weiterhin sind die erste Halterung 2, die zweite Halterung 3 und die dritte Halterung 4 wie in der Figur 1 erkennbar dreiecksförmig und im Uhrzeigersinn nebeneinanderliegend angeordnet. In der Mitte zwischen den drei Batteriezellen 21, 31, 41 ist ein Abstandhalter 15 angeordnet, welcher den verbleibenden, ansonsten leeren Raum füllt.

Um eine sichere und stabile Anordnung der drei Batteriezellen 21, 31, 41 in den jeweiligen Halterungen 2, 3, 4 zu ermöglichen, umfasst der Zellhalter 1 drei Federelemente 5, 6, 7. Ein erstes Federelement 5 ist dabei zwischen der ersten Halterung 2 und der zweiten Halterung 3 angeordnet. Weiterhin ist ein zweites Federelement 6 zwischen der ersten Halterung 2 und der dritten Halterung 4 angeordnet. Zudem ist ein drittes Federelement 7 zwischen der zweiten Halterung 3 und der dritten Halterung 4 angeordnet. Durch die drei Federelemente 5, 6, 7 wird ermöglicht, dass jede der drei Batteriezellen 21, 31, 41 sowohl in axialer Richtung, als auch in radialer Richtung in der entsprechenden Halterung 2, 3, 4 eingespannt ist und somit in einer definierten und stabilen Position im Zellhalter 1 gehalten ist. Die genaue Ausgestaltung und Funktionsweise der Federelemente 5, 6, 7 wird in Bezug auf die Figur 2 anhand des ersten Federelements 5 nachfolgend näher beschrieben.

Die Figur 2 zeigt ein Detail einer Schnittansicht der Figur 1 entlang der Linie I-I. Das erste Federelement 5 ist im Bereich zwischen der ersten Halterung 2 und der zweiten Halterung 3 stabförmig ausgebildet. An dem in Richtung der Längsachse 28 oberen Ende weist das erste Federelement 5 einen hakenförmigen Bereich 50 auf. An diesem hakenförmigen Bereich 50 sind ein erster Federabschnitt 51 und ein zweiter Federabschnitt 52 des ersten Federelements 5 ausgebildet. Zumindest der erste Federabschnitt 51 und der zweite Federabschnitt 52 sind aus einem elastischen Material ausgebildet, sodass diese durch eine Nachgiebigkeit Federkräfte auf die beiden angrenzenden Batteriezellen 21, 31 ausüben können, um diese in den Halterungen 2, 3 einzuspannen, wie nachfolgend beschrieben.

Der erste Federabschnitt 51 des ersten Federelements 5 ist eingerichtet, die erste Batteriezelle 21 in axialer Richtung in der ersten Halterung 2 einzuspannen. Das heißt, der erste Federabschnitt 51 übt eine erste Federkraft in der Richtung A parallel zur Längsachse 28 auf die erste Batteriezelle 21 aus, um diese in der ersten Halterung 2 einzuspannen. Die erste Federkraft ist dabei von einer Auslenkung des ersten Federabschnitts 51 in axialer Richtung, also entlang der Längsachse 28, abhängig. Der erste Federabschnitt 51 ist so geformt, dass dieser ausschließlich auf einem umlaufenden Schulterbereich 210 der ersten Batteriezelle 21 aufliegt. Dadurch ist ein Pluspol 211, welcher mittig an der oberen Stirnseite der ersten Batteriezelle 21 und radial innerhalb des Schulterbereichs 210 angeordnet ist, frei zugänglich, beispielsweise für eine elektrische Kontaktierung der ersten Batteriezelle 21.

Weiterhin weist das erste Federelement 5 einen zweiten Federabschnitt 52 auf, welcher eingerichtet ist, die zweite Batteriezelle 31 in radialer Richtung in der zweiten Halterung 3 einzuspannen. Das heißt, der zweite Federabschnitt 52 übt eine zweite Federkraft in der Richtung B auf die zweite Batteriezelle 31 aus, um diese in der zweiten Halterung 3 einzuspannen. Die zweite Federkraft ist von einer Auslenkung des zweiten Federabschnitts 52 in radialer Richtung, also parallel zur Richtung B, abhängig.

Die zweite Batteriezelle 31 liegt, wie insbesondere in der Figur 1 zu erkennen, nicht unmittelbar an der Gehäusewand 10 an, sondern ist zwischen dem zweiten Federabschnitt 52 und zwei radialen Anschlägen 35, 36, welche von der Gehäusewand 10 radial nach innen vorstehen, eingespannt. Die beiden radialen Anschläge 35, 36 und der zweite Federabschnitt 52 sind um den Umfang der zweiten Halterung 3 verteilt angeordnet. Dadurch ergibt sich eine radiale Drei-Punkt-Lagerung der zweiten Batteriezelle 31. Die erste Batteriezelle 21 ist ähnlich in radialer Richtung zwischen dem dritten Federabschnitt 61 des zweiten Federelements 6 und zwei radialen Anschlägen 25, 26 der ersten Halterung 2 eingespannt. Da die Schnittlinie I-I durch den Anschlag 25 der ersten Halterung 2 verläuft, ist dieser Anschlag 25 in der Figur 2 zu erkennen. Die dritte Batteriezelle 41 ist auf gleiche Art und Weise in der dritten Halterung 4 eingespannt.

Durch die einteilige Ausgestaltung des ersten Federelements 5 mit dem ersten Federabschnitt 51 und dem zweiten Federabschnitt 52 sind der erste Federabschnitt 51 und der zweite Federabschnitt 52 direkt miteinander gekoppelt. Dies führt dazu, dass eine Auslenkung des ersten Federabschnitts 51 in axialer Richtung, beispielsweise entgegen der Richtung A, eine Auslenkung des zweiten Federabschnitts 52, beispielsweise in Richtung B, bewirkt (vgl. Figur 2). Dies erfolgt auch in umgekehrter Richtung. Dadurch ergibt sich eine selbstverstärkende Einspannung der beiden Batteriezellen 21, 31 über das erste Federelement 5.

Analog zur eben beschriebenen Funktionsweise des ersten Federelements 5 wirken das zweite Federelement 6 und das dritte Federelement 7. Jede der drei Batteriezellen 21, 31, 41 ist somit durch jeweils ein Federelement 5, 6, 7 in axialer Richtung in der entsprechenden Halterung 2, 3, 4 eingespannt. Jedes Federelement 5, 6, 7 bewirkt dabei zudem eine Einspannung der jeweils im Uhrzeigersinn unmittelbar benachbarten Batteriezelle 21, 31, 41 in radialer Richtung (vgl. Figur 1). Somit ermöglicht der Zellhalter 1 auf sehr einfache Art und Weise ein besonders einfaches und effektives Halten sämtlicher Batteriezellen 21, 31, 41 in der jeweiligen Halterung 2, 3, 4 mit nur wenigen Bauteilen. Durch die spezielle nachgiebige Ausgestaltung der Federelemente 5, 6, 7 können auch größere Toleranzen, beispielsweise im Bereich von 10%, in den äußeren Abmessungen der Batteriezellen 21, 31, 41 ausgeglichen werden und weiterhin bewirkt der Zellhalter 1 eine effektive Dämpfung äußerer mechanischer Krafteinflüsse auf die Batteriezellen 21, 31, 41, wie Schwingungen, Schocks oder Vibrationen.

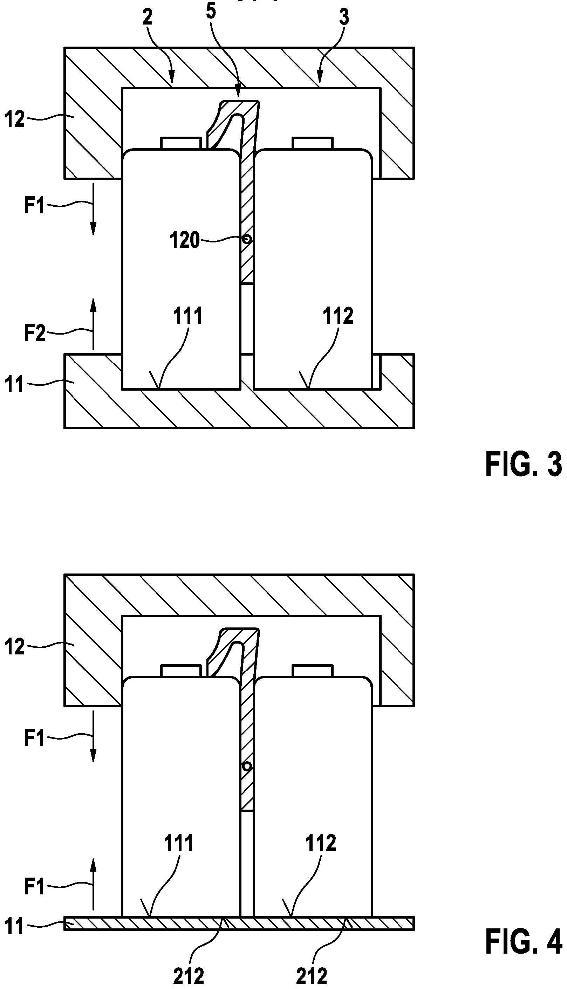

Die Figur 3 zeigt eine vereinfachte schematische Schnittansicht eines Zellhalters 1 gemäß einem zweiten Ausführungsbeispiel der Erfindung. Das zweite Ausführungsbeispiel entspricht im Wesentlichen dem ersten Ausführungsbeispiel in den Figuren 1 und 2, wobei der Zellhalter 1 zweiteilig ausgeführt ist. Der Zellhalter 1 umfasst im zweiten Ausführungsbeispiel einen ersten Zellhalter-Teil 11 und einen zweiten Zellhalter-Teil 12. Der erste Zellhalter-Teil 11 weist jeweils einen axialen Fest-Anschlag 111, 112 je Halterung 2, 3, 4 auf, wobei in der Figur 3 nur die beiden Fest-Anschläge 111, 112 der ersten Halterung 2 und der zweiten Halterung 3 dargestellt sind. Die beiden Fest-Anschläge 111, 112 sind als sacklochartige Vertiefungen im ersten Zellhalter-Teil 11 ausgebildet und bilden jeweils einen fixen Anlagepunkt für die axialen Enden der Batteriezellen 21, 31 am ersten Teilhalter-Teil 11.

Am zweiten Zellhalter-Teil 12 sind die Federelemente 5, 6, 7 vorgesehen. Die Federelemente 5, 6, 7 sind mittels Befestigungspunkten 120 mit dem zweiten Zellhalter-Teil 12 verbunden, wobei die genaue Art der Verbindung nicht näher dargestellt ist und insbesondere auf verschiedene Art und Weise erfolgen kann, z.B. mittels Stangen oder Gelenken. Erforderlich ist dabei lediglich, dass durch die Befestigungspunkte 120 die Auslenkungen des ersten Federabschnitts 51 sowie des zweiten Federabschnitts 52 nicht eingeschränkt sind.

Indem die beiden Zellhalter-Teile 11, 12 parallel zur Längsachse 28 jeweils mit einer entgegengesetzten Vorspannkraft F1 bzw. F2 gegeneinander vorgespannt werden, können aufgrund der speziellen Gestaltung der Federelemente 5, 6, 7 die auf die Batteriezellen 21, 31, 41 wirkenden Federkräfte beeinflusst und je nach Anforderung angepasst werden. Beispielsweise können die beiden Zellhalter-Teile 11, 12 in Umgebungen mit größeren Vibrationsbelastungen stärker vorgespannt werden, um eine stabile Lagerung der Batteriezellen 21, 31, 41 zu gewährleisten, wohingegen in anderen Umgebungen eine niedrige Vorspannkraft für eine sichere Lagerung ausreichen kann.

Die Figur 4 zeigt eine vereinfachte schematische Schnittansicht eines Zellhalters 1 gemäß einem dritten Ausführungsbeispiel der Erfindung. Das dritte Ausführungsbeispiel entspricht dabei im Wesentlichen dem zweiten Ausführungsbeispiel in der Figur 3 mit einer alternativen Ausgestaltung des ersten Zellhalter-Teils 11. Im dritten Ausführungsbeispiel ist der erste Zellhalter-Teil 11 als ebene Kontaktplatte ausgeführt, welche senkrecht zur Längsachse 28 angeordnet ist. Die Kontaktplatte 11 ist aus einem Metall gebildet und ermöglicht einen einfachen Stromabgriff an einem Minuspol 212 der Batteriezellen 21, 31, 41. Wie im zweiten Ausführungsbeispiel in der Figur 3 können die Kontaktplatte 11 und der zweite Zellhalter-Teil 12 mit entgegengesetzten Vorspannkräften F1 bzw. F2 gegeneinander vorgespannt werden, um die Federkräfte auf die Batteriezelle 21, 31, 41 einzustellen.

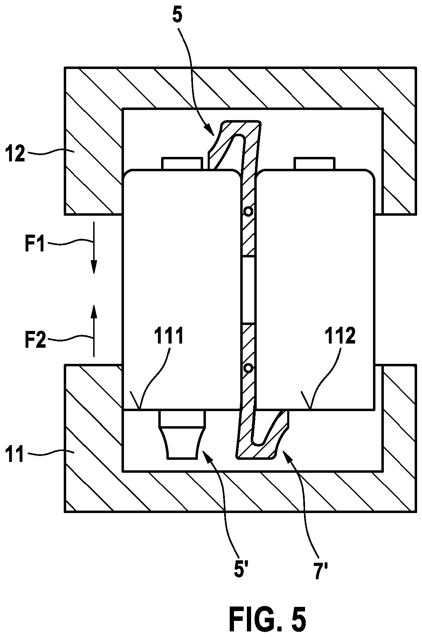

Die Figur 5 zeigt eine vereinfachte schematische Schnittansicht eines Zellhalters 1 gemäß einem vierten Ausführungsbeispiel der Erfindung. Das vierte Ausführungsbeispiel entspricht dabei im Wesentlichen dem zweiten Ausführungsbeispiel in der Figur 3 mit einer weiteren alternativen Ausgestaltung des ersten Zellhalter-Teils 11. Im vierten Ausführungsbeispiel ist der erste Zellhalter-Teil 11 identisch mit dem zweiten Zellhalter-Teil 12 und um 180° gegenüber der Vertikalen gedreht. Somit ist an beiden axialen Enden jeder Halterung 2, 3, 4 jeweils ein Federelement 5, 6, 7, 5', 6', 7' vorgesehen, wobei in der Figur 5 aus Darstellungsgründen nur drei der Federelemente 5, 5', 7' sichtbar sind. Dadurch wird jede Batteriezelle 21, 31, 41 jeweils an beiden axialen Enden federnd eingespannt. Wie im zweiten und dritten Ausführungsbeispiel in den Figuren 3 bzw. 4 können die beiden Zellhalter-Teile 11, 12 mit entgegengesetzten Vorspannkräften F1 bzw. F2 gegeneinander vorgespannt werden, um die Federkräfte auf die Batteriezelle 21, 31, 41 einzustellen.

Es sei angemerkt, dass in den Ausführungsbeispielen lediglich aus Gründen der Anschaulichkeit nur drei bzw. zwei Halterungen 2, 3, 4 des Zellhalters 1 dargestellt sind. Stattdessen können vielmehr auch beliebige Anzahlen, mindestens allerdings zwei, an Halterungen 2, 3, 4 in dem erfindungsgemäßen Zellhalter 1 vorgesehen sein.

## Patentansprüche

1. Zellhalter zum Halten von Batteriezellen, umfassend:
- eine erste Halterung (2), welche ausgebildet ist zur Aufnahme einer ersten Batteriezelle (21),
- eine zweite Halterung (3), welche ausgebildet ist zur Aufnahme einer zweiten Batteriezelle (31), und
- ein erstes Federelement (5),
- wobei das erste Federelement (5) einen ersten Federabschnitt (51) aufweist, welcher eingerichtet ist, die erste Batteriezelle (21) mittels einer ersten Federkraft in axialer Richtung der ersten Batteriezelle (21) in der ersten Halterung (2) einzuspannen,
**dadurch gekennzeichnet, dass**
- das Federelement (5) einen zweiten Federabschnitt (52) aufweist, welcher eingerichtet ist, die zweite Batteriezelle (31) mittels einer zweiten Federkraft in radialer Richtung der zweiten Batteriezelle (31) in der zweiten Halterung (3) einzuspannen, wobei das erste Federelement (5) so ausgebildet ist, dass eine Erhöhung der ersten Federkraft eine Erhöhung der zweiten Federkraft bewirkt.

2. Zellhalter nach Anspruch 1, ferner umfassend ein zweites Federelement (6), wobei das zweite Federelement (6) einen dritten Federabschnitt (61) aufweist, welcher eingerichtet ist, die erste Batteriezelle (21) mittels einer dritten Federkraft in radialer Richtung der ersten Batteriezelle (21) in der ersten Halterung (2) einzuspannen.

3. Zellhalter nach einem der vorhergehenden Ansprüche, wobei das erste Federelement (5) so ausgebildet ist, dass eine Erhöhung der zweiten Federkraft eine Erhöhung der ersten Federkraft bewirkt.

4. Zellhalter nach einem der vorhergehenden Ansprüche, wobei die erste Federkraft von einer Auslenkung des ersten Federabschnitts (51) in axialer Richtung abhängig ist.

5. Zellhalter nach einem der vorhergehenden Ansprüche, wobei die zweite Federkraft von einer Auslenkung des zweiten Federabschnitts (52) in radialer Richtung abhängig ist.

6. Zellhalter nach einem der vorhergehenden Ansprüche, wobei die zweite Halterung (3) zwei radiale Anschläge (25, 26) aufweist, welche jeweils einen Anlagepunkt in radialer Richtung der ersten Batteriezelle (31) bilden, und wobei die beiden radialen Anschläge (25, 26) und der zweite Federabschnitt (52) insbesondere um den Umfang der zweiten Halterung (3) verteilt angeordnet sind.

7. Zellhalter nach einem der vorhergehenden Ansprüche, wobei der erste Federabschnitt (51) derart ausgebildet ist, dass der erste Federabschnitt (51), insbesondere ausschließlich, mit einem Schulterbereich (210) der ersten Batteriezelle (21) in Eingriff steht.

8. Zellhalter nach einem der Ansprüche 2 bis 7, ferner umfassend zumindest eine dritte Halterung (4), welche ausgebildet ist zur Aufnahme einer dritten Batteriezelle (41), wobei insbesondere die erste Halterung (2), die zweite Halterung (3) und die dritte Halterung (4) in einem Dreieck angeordnet sind.

9. Zellhalter nach Anspruch 8, ferner umfassend ein drittes Federelement (7), wobei das erste Federelement (5), das zweite Federelement (6) und das dritte Federelement (7) ausgebildet sind, jeweils eine der Batteriezellen (21, 31, 41) in axialer Richtung einzuspannen sowie jeweils eine der unmittelbar benachbarten Batteriezellen (21, 31, 41) in radialer Richtung einzuspannen.

10. Zellhalter nach einem der vorhergehenden Ansprüche, wobei der Zellhalter (1) mehrteilig, insbesondere zweiteilig, ausgebildet ist.

11. Zellhalter nach Anspruch 10, wobei ein erster Zellhalter-Teil (11) jeweils einen axialen Fest-Anschlag (111, 112) je Halterung (2, 3, 4) aufweist, und wobei ein zweiter Zellhalter-Teil (12) zumindest das erste Federelement (5) aufweist.

12. Zellhalter nach Anspruch 11, wobei der erste Zellhalter-Teil (11) eine Kontaktplatte zum Stromabgriff an den Batteriezellen (21, 31, 41) ist.

13. Zellhalter nach Anspruch 12, wobei der erste Zellhalter-Teil (11) und der zweite Zellhalter-Teil (12) jeweils zumindest ein Federelement (5, 6, 7) je Halterung (2, 3, 4) aufweisen, sodass an jedem axialen Ende jeder der Halterungen (2, 3, 4) jeweils ein Federelement (5, 6, 7) vorgesehen ist, welches eingerichtet ist, die jeweilige Batteriezelle (21, 31, 41) in axialer Richtung einzuspannen, und insbesondere jeweils eine benachbarte Batteriezelle (21, 31,41) in radialer Richtung einzuspannen.

14. Zellblock, umfassend zumindest einen Zellhalter (1) gemäß einem der vorhergehenden Ansprüche und jeweils eine Batteriezelle (21, 31, 41) je Halterung (2, 3, 4) des Zellhalters (1).

## Claims

1. Cell holder for holding battery cells, comprising:
- a first mount (2), which is configured to take a first battery cell (21),
- a second mount (3), which is configured to take a second battery cell (31), and
- a first spring element (5),
- wherein the first spring element (5) has a first spring section (51), which is designed to clamp the first battery cell (21) in the first mount (2) by means of a first spring force in an axial direction of the first battery cell (21),
**characterized in that**
- the spring element (5) has a second spring section (52), which is designed to clamp the second battery cell (31) in the second mount (3) by means of a second spring force in a radial direction of the second battery cell (31), wherein the first spring element (5) is configured such that an increase in the first spring force causes an increase in the second spring force.

2. Cell holder according to Claim 1, further comprising a second spring element (6), wherein the second spring element (6) has a third spring section (61), which is designed to clamp the first battery cell (21) in the first mount (2) by means of a third spring force in a radial direction of the first battery cell (21).

3. Cell holder according to either of the preceding claims, wherein the first spring element (5) is configured such that an increase in the second spring force causes an increase in the first spring force.

4. Cell holder according to one of the preceding claims, wherein the first spring force is dependent on a deflection of the first spring section (51) in an axial direction.

5. Cell holder according to one of the preceding claims, wherein the second spring force is dependent on a deflection of the second spring section (52) in a radial direction.

6. Cell holder according to one of the preceding claims, wherein the second mount (3) has two radial stops (25, 26), each of which forms a bearing point in a radial direction of the first battery cell (31), and wherein the two radial stops (25, 26) and the second spring section (52) are arranged in a manner distributed in particular around the circumference of the second mount (3).

7. Cell holder according to one of the preceding claims, wherein the first spring section (51) is configured such that the first spring section (51) is engaged, in particular exclusively, with a shoulder area (210) of the first battery cell (21).

8. Cell holder according to one of Claims 2 to 7, also comprising at least a third mount (4), which is configured to take a third battery cell (41), wherein in particular the first mount (2), the second mount (3) and the third mount (4) are arranged in a triangle.

9. Cell holder according to Claim 8, also comprising a third spring element (7), wherein the first spring element (5), the second spring element (6) and the third spring element (7) are configured to clamp in each case one of the battery cells (21, 31, 41) in an axial direction and to clamp in each case one of the immediately adjacent battery cells (21, 31, 41) in a radial direction.

10. Cell holder according to one of the preceding claims, wherein the cell holder (1) is formed in multiple parts, in particular in two parts.

11. Cell holder according to Claim 10, wherein a first cell holder part (11) comprises in each case one axial fixed stop (111, 112) per mount (2, 3, 4), and wherein a second cell holder part (12) comprises at least the first spring element (5).

12. Cell holder according to Claim 11, wherein the first cell holder part (11) is a contact plate for tapping current at the battery cells (21, 31, 41).

13. Cell holder according to Claim 12, wherein the first cell holder part (11) and the second cell holder part (12) each have at least one spring element (5, 6, 7) per mount (2, 3, 4), such that a spring element (5, 6, 7) is provided at each axial end of each of the mounts (2, 3, 4) in each case, said spring element (5, 6, 7) being designed to clamp the relevant battery cell (21, 31, 41) in an axial direction, and in particular to clamp in each case one adjacent battery cell (21, 31, 41) in a radial direction.

14. Cell block comprising at least one cell holder (1) according to one of the preceding claims and in each case one battery cell (21, 31, 41) per mount (2, 3, 4) of the cell holder (1).

## Revendications

1. Support de cellule permettant de supporter des éléments de batterie, comprenant :
- un premier dispositif de support (2) qui est conçu pour recevoir un premier élément de batterie (21),
- un deuxième dispositif de support (3) qui est conçu pour recevoir un deuxième élément de batterie (31), et
un premier élément à ressort (5),
- le premier élément à ressort (5) comportant une première partie de ressort (51) qui est conçue pour serrer le premier élément de batterie (21) dans le premier dispositif de support (2) au moyen d'une première force de ressort agissant dans la direction axiale du premier élément de batterie (21),
**caractérisé en ce que**
- l'élément à ressort (5) comprend une deuxième partie de ressort (52) qui est conçue pour serrer le deuxième élément de batterie (31) dans le deuxième dispositif de support (3) au moyen d'une deuxième force de ressort agissant dans la direction radiale du deuxième élément de batterie (31), le premier élément à ressort (5) étant conçu de telle sorte qu'une augmentation de la première force de ressort provoque une augmentation de la deuxième force de ressort.

2. Support de cellule selon la revendication 1, comprenant en outre un deuxième élément à ressort (6), le deuxième élément à ressort (6) comprenant une troisième partie de ressort (61) qui est conçue pour serrer le premier élément de batterie (21) dans le premier dispositif de support (2) au moyen d'une troisième force de ressort agissant dans la direction radiale du premier élément de batterie (21).

3. Support de cellule selon l'une quelconque des revendications précédentes, dans lequel le premier élément à ressort (5) est conçu de telle sorte qu'une augmentation de la deuxième force de ressort provoque une augmentation de la première force de ressort.

4. Support de cellule selon l'une quelconque des revendications précédentes, dans lequel la première force de ressort dépend d'une déviation de la première partie de ressort (51) dans la direction axiale.

5. Support de cellule selon l'une quelconque des revendications précédentes, dans lequel la deuxième force de ressort est fonction d'une déviation de la deuxième partie de ressort (52) dans la direction radiale.

6. Support de cellule selon l'une quelconque des revendications précédentes, dans lequel le deuxième dispositif de support (3) présente deux butées radiales (25, 26) qui forment respectivement un point d'appui dans la direction radiale du premier élément de batterie (31), et dans lequel les deux butées radiales (25, 26) et la deuxième partie de ressort (52) sont notamment agencées de manière répartie sur le pourtour du deuxième dispositif de support (3).

7. Support de cellule selon l'une quelconque des revendications précédentes, dans lequel la première partie de ressort (51) est conçue de telle sorte que la première partie de ressort (51) soit en prise, notamment exclusivement, avec une zone d'épaulement (210) du premier élément de batterie (21).

8. Support de cellule selon l'une quelconque des revendications 2 à 7, comprenant en outre au moins un troisième dispositif de support (4) qui est conçu pour recevoir un troisième élément de batterie (41), le premier dispositif de support (2), le deuxième dispositif de support (3) et le troisième dispositif de support (4) étant notamment agencés en triangle.

9. Support de cellule selon la revendication 8, comprenant en outre un troisième élément à ressort (7), le premier élément à ressort (5), le deuxième élément à ressort (6) et le troisième élément à ressort (7) étant conçus pour serrer respectivement l'un des éléments de batterie (21, 31, 41) dans la direction axiale et pour serrer respectivement l'un des éléments de batterie (21, 31, 41) directement adjacents dans la direction radiale.

10. Support de cellule selon l'une quelconque des revendications précédentes, dans lequel le support de cellule (1) est réalisé en plusieurs parties, notamment en deux parties.

11. Support de cellule selon la revendication 10, dans lequel une première partie de support de cellule (11) présente respectivement une butée axiale fixe (111, 112) par dispositif de support (2, 3, 4), et dans lequel une deuxième partie de support de cellule (12) présente au moins le premier élément à ressort (5).

12. Support de cellule selon la revendication 11, dans lequel la première partie de support de cellule (11) est une plaque de contact destinée à prélever du courant sur les éléments de batterie (21, 31, 41).

13. Support de cellule selon la revendication 12, dans lequel la première partie de support de cellule (11) et la deuxième partie de support de cellule (12) comportent respectivement au moins un élément à ressort (5, 6, 7) par dispositif de support (2, 3, 4), de telle sorte qu'à chaque extrémité axiale de chacun des dispositifs de support (2, 3, 4), il est prévu respectivement un élément à ressort (5, 6, 7) qui est conçu pour serrer l'élément de batterie (21, 31, 41) respectif dans la direction axiale, et notamment pour serrer respectivement un élément de batterie (21, 31, 41) adjacent dans la direction radiale.

14. Bloc de cellules comprenant au moins un support de cellule (1) selon l'une quelconque des revendications précédentes et respectivement une cellule de batterie (21, 31, 41) par dispositif de support (2, 3, 4) du support de cellule (1).
